(19) Europäisches Patentamt
European Patent Office
Office européen des brevets

(11) EP 0 576 070 B1

(12) **EUROPEAN PATENT SPECIFICATION**

(45) Date of publication and mention
of the grant of the patent:
**18.06.1997 Bulletin 1997/25**

(51) Int Cl.6: **G01C 22/02**, G01C 21/12

(21) Application number: **93201723.9**

(22) Date of filing: **16.06.1993**

(54) **Error correction device for vehicle odometer**

Fehlerkorrektureinrichtung für Fahrzeugodometer

Dispositif de correction d'erreur pour odomètre

(84) Designated Contracting States:
**DE FR GB IT SE**

(30) Priority: **22.06.1992 EP 92201817**

(43) Date of publication of application:
**29.12.1993 Bulletin 1993/52**

(73) Proprietor: **Philips Electronics N.V.**
**5621 BA Eindhoven (NL)**

(72) Inventors:
• **Van de Walle, Gerjan Franciscus Arthur, c/o Int.**
**NL-5656 AA Eindhoven (NL)**
• **Widdershoven, Franciscus Petrus, c/o Int.**
**NL-5656 AA Eindhoven (NL)**

(74) Representative: **Strijland, Wilfred et al**
**INTERNATIONAAL OCTROOIBUREAU B.V.,**
**Prof. Holstlaan 6**
**5656 AA Eindhoven (NL)**

(56) References cited:
EP-A- 0 337 797                 DE-A- 2 751 012
DE-A- 2 922 413

• PATENT ABSTRACTS OF JAPAN vol. 13, no. 32
(P-817)25 January 1989 & JP-A-63231211
• SOVIET PATENTS ABSTRACTS Section EI,
Week 8850, Derwent Publications Ltd., London,
GB; Class SO2, AN 88-359505 & SU-A-1401281

**Description**

FIELD OF THE INVENTION

The invention relates to a device for determining a displacement of a vehicle on wheels which are connected to a body of the vehicle by wheel suspension means, which device comprises at least one sensor for measuring a first quantity which is indicative of a rotary velocity of a wheel of the vehicle, and means for processing the first quantity so as to determine the displacement. The invention also relates to a navigation system for a vehicle, which system comprises such a device, and also to a vehicle comprising such a device, and/or navigation system.

A device of the kind set forth is known from United States Patent Specification US 4,862,486. The cited Specification describes a device which determines the number of revolutions of a wheel of a vehicle per unit of time, and therefore, the actual speed, by means of a sensor which is mounted on the inner side of a tyre and which is responsive to deformation of the part of the tyre on which the sensor is mounted. The displacement of the vehicle can be approximated by measurement of the number of revolutions of a wheel, provided that the rolling or outer radius of the wheel is known.

It is a drawback of such a device that the determination of the displacement of the vehicle is inaccurate, because the displacement determined from the number of revolutions of the wheel is in fact the displacement of a reference point on the outer circumference of the wheel. However, this displacement is not always equal to the actual vehicle displacement. In the case of a bumpy road surface, the apparent displacement of the reference point on the outer circumference of the wheel will be greater than the displacement of the vehicle body which does not exactly follow the bumps in the road surface due to the damping effect of the wheel suspension. Irregularities in the road surface thus introduce a systematic error in the determination of the displacement of the vehicle.

The invention relates to a device for determining the displacement along a surface by a vehicle that is mounted on suspending wheels by wheel suspension means, which device comprises at least one first sensor for measuring a first quantity that is indicative of a rotary velocity of a wheel of the vehicle, at least one second wheel-mounted sensor for measuring a further quantity that is indicative for instantaneous irregularities of the surface, and processing means for processing the first and second quantities so as to determine the displacement. The invention also relates to a navigation system for a vehicle provided with such a device, and to a vehicle comprising such a device and/or navigation system.

The full text of Japanese Public Disclosure (Kokai) 63-231211 discloses a vehicle provided with such a device, in particular for application as a lawn mower device or for other robotic-type functions. This means that the motion of the vehicle is relatively slow in view of the intended functionality, and the carriage is not supported by springs. The second sensor is mounted on an extra wheel that has no supporting function. The shape of the road is therefore obviously determined by fitting a parabola through the supporting points of three or more wheels that are staggered along the length of the vehicle. To first approximation, the vehicle body follows the bumps of the terrain to be covered.

On the other hand, the invention is directed to measuring of the distance covered by a high-speed, spring-suspended vehicle, that as an automobile must conform to strict styling requirements that keep the number of wheels as low as possible, therewith also avoiding the high cost of an extra wheel that should keep road contact even at extreme velocities, whilst maintaining a high standard of calculatory correctness even for long distances covered at highly variable speeds, such as would be commensurate for applications such as navigation, and which would therefor be effective down to such small distance differences as would determine such navigation policies, such as in the choosing between neighbouring, but parallel roads.

Accordingly, according to one of its aspects, the invention is characterized in that said second sensor is arranged for measuring an instantaneous vertical velocity of the associated wheel relative to the body, through being connected to a shock absorber or to a spring of said suspension means, and said processing means comprise a correction filter with filter parameters that are non-uniform in dependence of one or more static or dynamic parameters pertaining to the vehicle. This allows to correct for irregularities in the road surface to get the exact distance travelled. The filtering allows to cater for effects that are non-uniform over the variation of various parameters that may influence the behaviour of the vehicle, such as the actual velocity itself. Various further advantageous aspects are recited in dependent Claims.

By itself, DE-A 29 22 413 describes a car-mounted system with a plurality of sensors that measure vertical accelerations, and whereof the results are cross-correlated to determine actual vehicle speed, given a longitudinal reference distance. In contradistinction, the present invention uses the second sensing exclusively as a corrective measure to the standard odometer, and does such not by cross-correlating, but by **averaging** results derived from various ones of the second sensors.

The device can be advantageously used in a navigation system for determining the position of a vehicle by dead reckoning.

BRIEF DESCRIPTION OF THE DRAWING

These and other aspects of the invention will be described in detail with reference to a preferred embodiment, and in particular with reference to the appended Figures, in which:

Fig. 1A illustrates how a vehicle follows a bumpy road surface;
Fig. 1B shows the same as Fig. 1A but at an enlarged scale;
Fig. 2 shows a part of a vehicle provided with the device in accordance with the invention.

DETAILED DESCRIPTION OF A PREFERRED EMBODIMENT

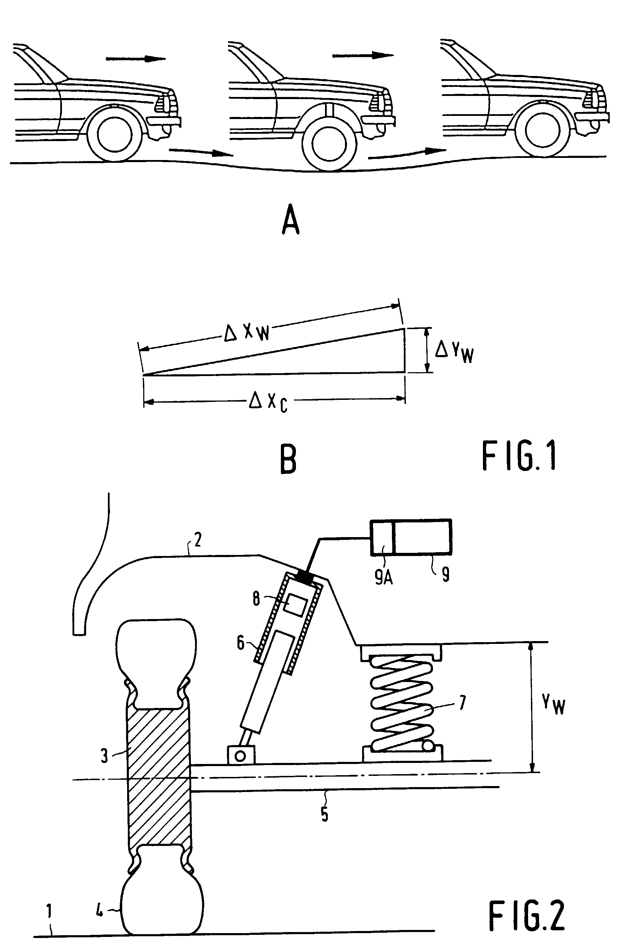

Fig. 1A is a stylized representation of how a bump in a road is dealt with by a vehicle on wheels which are connected to its body by a wheel suspension. Due to the damping effect of the wheel suspension, via springs and/or shock absorbers, the displacement of the body is less than the apparent displacement of points on the circumference of the wheels, because the wheels follow irregularities of the road surface much closer than the center of gravity of the body This applies both to pits and to bumps in the road surfaces. When the measured rotary velocity of one or more wheels is used to determine the displacement of the vehicle, therefore, a systematic error occurs: the apparent displacement of a reference point on the outer circumference of a wheel is greater than that of the body. As a result, it will appear as if geographic locations (for example, two cities) are situated further apart than they are in reality. In accordance with the invention, this systematic error is eliminated by introducing a correction in the determination of the body displacement by means of the rotary velocity of one or more wheels. The correction is based on the measurement of the instantaneous vertical velocity of these one or more wheels relative to the body.

Fig. 1B shows the various displacement vectors on an enlarged scale. Herein, $X_W$ denotes the displacement of a reference point on the outer circumference of a wheel; $X_c$ denotes the vehicle displacement; $Y_W$ denotes the vertical displacement of the wheel relative to the body. During a small time interval $\Delta t$, the variation of these quantities amounts to $\Delta X_W$, $\Delta X_c$, $\Delta Y_W$, respectively, so that:

$$\left(\frac{\Delta X_c}{\Delta t}\right)^2 + \left(\frac{\Delta Y_w}{\Delta t}\right)^2 = \left(\frac{\Delta X_w}{\Delta t}\right)^2.$$

Thus, in the limiting case for $\Delta t \to 0$:

$$\dot{X}_c^{\,2} + \dot{Y}_w^{\,2} = \dot{X}_w^{\,2}$$

or

$$\dot{X}_c = \sqrt{\dot{X}_w^{\,2} - \dot{Y}_w^{\,2}}.$$

When $R_w$ is the rolling radius of a wheel and $\omega$ is the angular velocity of the wheel, it also holds that:

$$X_w = \int_t R_w \cdot \omega \, dt$$

so that for $X_c$ the following expression is derived:

$$X_c = \int_t \dot{X}_c \, dt = \int_t \sqrt{(R_w \cdot \omega)^2 - \dot{Y}_w{}^2} \; dt$$

$$= \int_t R_w \cdot \omega \cdot \sqrt{1 - \frac{\dot{Y}_w{}^2}{(R_w \cdot \omega)^2}} \; dt.$$

In a first approximation where the correction is relatively small, this may be written as

$$\int_t \left[ R{-}w \cdot \omega - \frac{\dot{Y}_w^2}{2R_w \cdot \omega} \right] dt$$

When the vertical velocity of the wheel relative to the body, $\dot{Y}_w$, is known at any instant, the body displacement follows from the calculation of the above integral. Processing means, for example a microprocessor, calculate this integral on the basis of inputs $R_w$, $\omega$ and $\dot{Y}_w$.

The instantaneous value of $\omega$ is supplied by a sensor which measures the number of revolutions of the wheel per unit of time. The value of the rolling radius $R_w$ is substantially constant. Deformation of the tyre by too high or too low pressure does not cause a substantial variation of the length of the running surface of the wheel. The instantaneous value of $\dot{Y}_w$ is supplied by a sensor, for example a pressure sensor, a distance sensor, a speed sensor or an acceleration sensor, mounted on or in a shock absorber or a spring of the wheel suspension. Evidently, these sensors require calibration. For example, when use is made of a pressure sensor, first the pressure detected is by differentiation converted into the pressure variation with time. The latter quantity is then translated, for example using a look-up table stored in the processing means, into the associated vertical velocity of the wheel relative to the body.

It is to be noted that active shock absorbers comprising sensors are already commercially available, and that an ABS system also includes a sensor for measuring the number of revolutions of a wheel per unit of time. Therefore, in the case of a car equipped with ABS the invention can be simply implemented by utilizing a shock absorber including a pressure sensor and by adding a microprocessor for calculating the integral on the basis of the signals from the ABS system and the pressure sensor. Evidently, a plurality of sensors can also be used, for example one revolution counter for each wheel of the vehicle and one pressure sensor for each associated shock absorber. The microprocessor can then determine the integral for each wheel, and can subsequently take the mean value of the calculated integral values as the final value for the vehicle displacement.

Fig. 2 shows a part of a vehicle comprising the device in accordance with the invention. The vehicle comprises a body 2, a wheel with a rim 3 and a tyre 4 in contact with the road surface 1, an axle 5, a shock absorber 6, and a spring 7. In this Figure a pressure sensor 8 is mounted inside the shock absorber 6. Evidently, the sensor could also be coupled to the spring 7. Processing means 9, comprising a microprocessor, receive signals from the pressure sensor and from the wheel revolution counter (not shown). On the basis thereof the microprocessor calculates the integral which suitably approximates the vehicle displacement in accordance with the invention. By itself, the calculation of the integral is straightforward and the calculation has not been given in detail. As shown, the shock absorber is mounted at an actue angle with respect to the vertical axis of the car body. The vertical motion of the wheel then is found through an elementary trigonometric operation on the total velocity measured by the pressure sensor.

Preferably, the means for processing the measured further quantity comprise a correction filter 9A for eliminating undesirable, disturbing components in the signal measured by the pressure sensor. The filter parameters, in particular, as represented by the response curve of the filter versus frequency, can be adjustable. The adjustment may be made in dependence on the type of wheel suspension of the vehicle, type of tube used, and various others, when appropriate. The adjustment can be made statically, for example, upon periodic inspection or repair of the vehicle. Other types of adjustment can be dynamic, such as depending onthe load of the vehicle. The latter adjustment is then made when the vehicle is at a standstill. For example, resonances which are specific of the wheel suspension of a given type of vehicle can be filtered out. The parameters required can be determined for each type of vehicle separately by calibration. In another embodiment, the filter parameters vary as a function of the angular velocity of the relevant wheel. When use is made of a variable filter, correction is possible for inaccuracies stemming from the fact that different disturbing factors occur at different vehicle speeds. For example, in the event of a high vehicle speed on an irregular road surface (for example, a gravel road) high-frequency components will arise in the signal from the pressure sensors, which components do not correspond to the actual displacement of the wheel. These high-frequency components can be filtered out by the variable correction filter. A given frequency in the signal from the pressure sensor, caused at a high speed by irregularities of the road surface which are large relative to the dimensions of a wheel, will occur at a lower speed in the event of road surface irregularities which are small relative to the wheel, for example pebbles. This is taken into account by the filter. Parameters for different speeds can be determined by calibration. In another embodiment, the filter parameters vary as a function of the vehicle load. Inaccuracies due to different loading of the vehicle are thus counteracted. Using, for example a look-up table stored in the processing means, the filter parameters for each load can be stored. The required parameters can be determined by calibration at different vehicle loads.

The invention can be advantageously used in a navigation system for vehicles, for example CARIN. A navigation system of this kind comprises a storage medium, for example a CD-ROM, containing topographic and traffic information concerning the area in which the vehicle travels. A microcomputer determines dead reckoning coordinates for the actual position of the vehicle by means of distance and direction sensors. In accordance with the invention, the displacement, and hence the position of the vehicle at any instant, can thus be determined more accurately. The position of the vehicle can be even more accurately determined by comparison of the calculated dead reckoning coordinates with the data on the CD-ROM. Notably when the vehicle travels in an area not represented on the CD-ROM, it is important that the displacement is also known exactly, because comparison with the stored data is then impossible. In that case the device in accordance with the invention can be particularly advantageously used.

Furthermore, the filter parameters of the correction filters can be adapted by means of a neural network which compares the displacement determined by the device with the displacement based on the data on the CD-ROM. The contents of the look-up table can thus be adapted, so that the accuracy is further enhanced.

**Claims**

1. A device for determining the displacement along a surface by a vehicle that is mounted on wheels by wheel suspension means, which device comprises at least one first sensor for measuring a first quantity that is indicative of a rotary velocity of a wheel of the vehicle, at least one second sensor for measuring a further quantity that is indicative of instantaneous irregularities of the surface, and processing means for processing the first and second quantities so as to determine the displacement,

   characterized in that said second sensor is arranged for measuring an instantaneous vertical velocity of the associated wheel relative to the body, through being connected to a shock absorber or to a spring of said suspension means, and said processing means comprise a correction filter with filter parameters that are variable in dependence of one or more static or dynamic parameters pertaining to the vehicle.

2. A device as claimed in Claim 1, wherein said parameters include one or more of the following: the type of wheel suspension of the vehicle, the actual angular velocity of the wheel in question, and the vehicle load.

3. A device as claimed in Claim 1 or 2, wherein the vehicle comprises at least two wheels that are each provided with a respective said second sensor, and said processing comprises averaging of result quantities deriving from respective said second sensors.

4. A navigation system for a vehicle, which system comprises a device as claimed in Claims 1, 2 or 3.

5. A vehicle comprising a device as claimed in Claims 1, 2 or 3.

**Patentansprüche**

1. Einrichtung zur Bestimmung einer Verlagerung eines mit Hilfe von Radaufhängungsmitteln auf Rädern montierten Fahrzeugs entlang einer Oberfläche, welche Einrichtung zumindest einen ersten Sensor zum Messen einer ersten Größe umfaßt, die eine Drehgeschwindigkeit eines Rades des Fahrzeugs anzeigt, zumindest einen zweiten Sensor zum Messen einer weiteren Größe, die momentane Unregelmäßigkeiten der Oberfläche anzeigt, und Verarbeitungsmittel zur Verarbeitung der ersten und der zweiten Größe, um die Verlagerung zu bestimmen,

   dadurch gekennzeichnet, daß der genannte zweite Sensor zum Messen einer momentanen vertikalen Geschwindigkeit des zugehörigen Rades relativ zur Karosserie eingerichtet ist, indem er mit einem Stoßdämpfer oder einer Feder der genannten Aufhängungsmittel verbunden ist, und daß die genannten Verarbeitungsmittel ein Korrekturfilter umfassen mit Filterparametern, die in Abhängigkeit von einem oder mehreren zu dem Fahrzeug gehörenden statischen oder dynamischen Parametern variabel sind.

**2.** Einrichtung nach Anspruch 1, wobei die genannten Parameter einen oder mehrere der folgenden Parameter enthalten: Art der Radaufhängung des Fahrzeugs, tatsächliche Winkelgeschwindigkeit des betreffenden Rades und die Belastung des Fahrzeugs.

**3.** Einrichtung nach einem der Ansprüche 1 oder 2, wobei das Fahrzeug zumindest zwei Räder umfaßt, die jeweils mit einem jeweiligen genannten zweiten Sensor versehen sind, und die genannte Verarbeitung das Mitteln von Ergebnisgrößen umfaßt, die aus den jeweiligen genannten zweiten Sensoren stammen.

**4.** Navigationssystem für ein Fahrzeug, welches System eine Einrichtung nach den Ansprüchen 1, 2 oder 3 umfaßt.

**5.** Fahrzeug mit einer Einrichtung nach einem der Ansprüche 1, 2 oder 3.


**Revendications**

**1.** Dispositif pour déterminer le déplacement sur une surface d'un véhicule qui est monté sur des roues par des moyens de suspension de roues, lequel dispositif comprend au moins un premier capteur pour mesurer une première grandeur qui est indicatrice d'une vitesse de rotation d'une roue du véhicule, au moins un deuxième capteur pour mesurer une autre grandeur qui est indicatrice d'irrégularités instantanées de la surface, et des moyens de traitement pour traiter les première et deuxième grandeurs de manière à déterminer le déplacement,
caractérisé en ce que ledit deuxième capteur est prévu pour mesurer une vitesse verticale instantanée de la roue associée par rapport à la carrosserie, en étant relié à un amortisseur ou à un ressort dudit moyen de suspension, et lesdits moyens de traitement comprennent un filtre de correction avec des paramètres de filtrage qui sont variables en fonction d'un ou plusieurs paramètres statiques ou dynamiques du véhicule.

**2.** Dispositif suivant la revendication 1, dans lequel lesdits paramètres comprennent un ou plusieurs des éléments suivants: le type de suspension de roues du véhicule, la vitesse angulaire réelle de la roue en question, et la charge du véhicule.

**3.** Dispositif suivant la revendication 1 ou 2, dans lequel le véhicule comprend au moins deux roues qui sont chacune pourvues d'un dit deuxième capteur respectif, et ledit traitement comprend le moyennage de grandeurs de résultats dérivant desdits deuxièmes capteurs respectifs.

**4.** Système de navigation pour un véhicule, lequel système comprend un dispositif suivant les revendications 1, 2 ou 3.

**5.** Véhicule comprenant un dispositif suivant les revendications 1, 2 ou 3.

A

$\Delta X_W$

$\Delta Y_W$

$\Delta X_C$

B

FIG.1

FIG.2